# FASCICULE DE BREVET EUROPEEN

(11) **EP 3 317 771 B1**
(45) Date de publication et mention de la délivrance du brevet: **24.02.2021**
(21) Numéro de dépôt: 16750902.5
(22) Date de dépôt: 29.06.2016
(51) Int. Cl.: G06F 13/38

(54) **ORGANE MAÎTRE À MOYENS D'ANALYSE DE DÉFAUT DE LA COUCHE PHYSIQUE D'UN RÉSEAU VIDÉO BIDIRECTIONNEL**
MASTEREINRICHTUNG MIT MITTEL ZUR ANALYSE EINES DEFEKTES IN DER PHYSIKALISCHEN SCHICHT EINES BIDIREKTIONALEN VIDEONETZWERKS
MASTER FACILITY WITH MEANS FOR ANALYSING A DEFECT IN THE PHYSICAL LAYER OF A BIDIRECTIONAL VIDEO NETWORK

(30) Priorité: 02.07.2015 FR 1556255
(43) Date de publication de la demande: 09.05.2018
(73) Titulaire: PSA Automobiles SA, 78300 Poissy (FR)
(72) Inventeur: ADJADJ, Mehdi, 92370 Chaville (FR); BOISSERIE, Antony, 91320 Wissous (FR)
(74) Mandataire: Jeannin, Laurent Jean-Pierre
(86) Numéro de dépôt international: PCT/FR2016/051616
(87) Numéro de publication internationale: WO 2017/001778

(56) Documents cités:
- FR-A1- 2 672 708
- FR-A1- 2 976 434
- US-A1- 2014 115 192

## Description

L'invention concerne les réseaux de communication adaptés à la transmission bidirectionnelle de trames de données non vidéo et à la transmission unidirectionnelle de trames de données vidéo, et plus précisément l'analyse de défaut de la couche physique de tels réseaux.

La publication FR276434 A1 décrit un dispositif de détection d'encombrement d'un réseau de communication en quasi temps réel, par analyse de temps d'attente de messages périodiques devant être transmis par un organe communicant. US2014/115192 A1 décrit une interface sérielle offrant une transmission bidirectionnelle de trames de données non-vidéo entre organes maître et esclave d'un réseau de communication.

Dans certains réseaux de communication du type précités, et notamment dans ceux dits « à signalisation différentielle à basse tension » (ou LVDS - « Low Voltage Differential Signaling »), un organe maître et au moins un organe esclave sont agencés de manière à s'échanger des trames de données non vidéo de façon bidirectionnelle, et des trames de données vidéo de façon unidirectionnelle.

La couche électrique (couche 1 dans le modèle OSI) des réseaux du type précité est standardisée. C'est notamment le cas des réseaux LVDS dont le standard est défini dans le document TIA/EIA-644 de l'ANSI (« American National Standards Institute »). Mais, comme le sait l'homme de l'art, tel n'est pas le cas des couches supérieures, si bien qu'il n'existe pas de mécanisme permettant de diagnostiquer la liaison de transmission bidirectionnelle. De ce fait, il est difficile, voire impossible, de localiser dans un service après-vente les potentielles pannes liées au réseau (comme par exemple identifier un calculateur défaillant ou un faisceau défaillant).

L'invention a donc notamment pour but d'améliorer la situation.

Elle propose notamment à cet effet un organe maître comprenant une interface de ligne, propre à être connectée à un réseau de communication adapté à la transmission bidirectionnelle de trames de données non vidéo et à la transmission unidirectionnelle de trames de données vidéo, et un microcontrôleur, couplé à l'interface de ligne via une ligne de défaut propre à lui transmettre une information primaire représentative de la présence ou de l'absence d'un défaut de la couche physique assurant la transmission bidirectionnelle.

Cet organe maître se caractérise par le fait qu'il comprend également :
- des moyens d'analyse agencés pour considérer (ou déterminer) qu'il existe un défaut confirmé de la couche physique (assurant la transmission bidirectionnelle) en cas de réception par le microcontrôleur d'une information primaire signalant (ou représentative de) la présence de façon confirmée d'un défaut de la couche physique, et
- des moyens de stockage propres à stocker une valeur représentative d'un défaut confirmé de la couche physique chaque fois que les moyens d'analyse considèrent (ou déterminent) qu'il existe un défaut confirmé de la couche physique.

Grâce à la remontée d'informations représentatives de défauts et au stockage d'indicateurs de défaut confirmé, il est désormais possible d'identifier l'origine des pannes ou dysfonctionnements survenant sur la liaison de transmission bidirectionnelle.

L'organe maître selon l'invention peut comporter d'autres caractéristiques qui peuvent être prises séparément ou en combinaison, et notamment :
- son microcontrôleur peut être agencé pour échantillonner l'information primaire transmise selon une période d'échantillonnage prédéfinie et pour produire une information secondaire à l'expiration de chaque période d'échantillonnage. Dans ce cas, ses moyens d'analyse peuvent être agencés pour considérer qu'il existe un défaut confirmé de la couche physique en cas de production d'informations secondaires signalant la présence d'un défaut de la couche physique de façon confirmée ;
   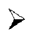 ses moyens d'analyse peuvent être agencés pour considérer qu'il y a une absence confirmée de défaut de la couche physique en cas de production d'informations secondaires signalant une absence de défaut de la couche physique de façon confirmée ;
   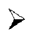 ses moyens d'analyse peuvent être agencés pour incrémenter d'une unité une valeur d'un compteur de défaut chaque fois qu'est produite une information secondaire signalant la présence d'un défaut de la couche physique, et pour considérer qu'il existe un défaut confirmé de la couche physique lorsque la valeur du compteur atteint une valeur maximale ;
      - ses moyens d'analyse peuvent être agencés pour rendre la valeur du compteur de défaut égale à la valeur maximale chaque fois que l'organe maître est mis en fonctionnement et que la dernière valeur était égale à la valeur maximale ;
      - ses moyens d'analyse peuvent être agencés pour décrémenter d'une unité la valeur du compteur de défaut chaque fois qu'est produite une information secondaire signalant une absence de défaut de la couche physique, et pour considérer qu'il y a une absence confirmée de défaut de la couche physique lorsque la valeur du compteur atteint une valeur minimale ;
         ∘ ses moyens d'analyse peuvent être agencés pour rendre la valeur du compteur de défaut égale à la valeur minimale chaque fois que l'organe maître est mis en fonctionnement et que la dernière valeur du compteur de défaut était égale à la valeur minimale ;
   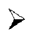 la période d'échantillonnage peut être comprise entre environ 50 ms et environ 300 ms ;
- ses moyens de stockage peuvent être propres à stocker une valeur représentative de l'absence confirmée de défaut de la couche physique chaque fois que les moyens d'analyse considèrent qu'il n'existe pas de défaut de la couche physique de façon confirmée.

L'invention propose également un véhicule, éventuellement de type automobile et comprenant, d'une part, un réseau de communication adapté à la transmission bidirectionnelle de trames de données non vidéo et à la transmission unidirectionnelle de trames de données vidéo, et, d'autre part, au moins un organe maître du type de celui présenté ci-avant et connecté au réseau de communication.

L'invention est particulièrement bien adaptée, bien que non limitativement, au cas où le réseau de communication est de type LVDS.

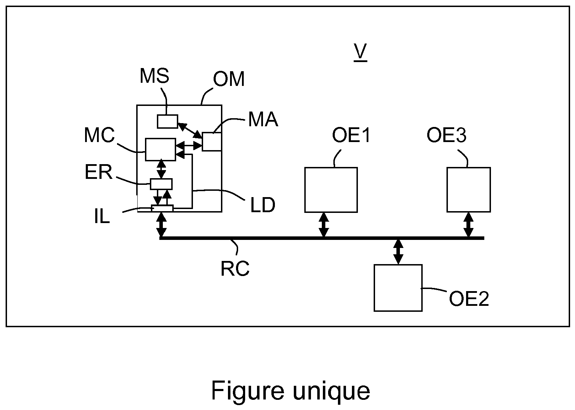

D'autres caractéristiques et avantages de l'invention apparaîtront à l'examen de la description détaillée ci-après, et du dessin annexé, sur lequel l'unique figure illustre schématiquement et fonctionnellement un véhicule comprenant un réseau de communication auquel sont connectés un organe maître selon l'invention et des organes esclaves.

L'invention a notamment pour but de proposer un organe maître OM propre à être connecté à un réseau de communication RC adapté à la transmission bidirectionnelle de trames de données non vidéo et à la transmission unidirectionnelle de trames de données vidéo.

Dans ce qui suit, on considère, à titre d'exemple non limitatif, que l'organe maître OM est destiné à être connecté à un réseau de communication RC de type LVDS (« Low Voltage Differential Signaling »). Mais l'invention n'est pas limitée à ce type de réseau de communication. D'une manière générale, l'invention concerne tout réseau de communication adapté à la transmission bidirectionnelle de trames de données non vidéo et à la transmission unidirectionnelle de trames de données vidéo.

Par ailleurs, on considère dans ce qui suit, à titre d'exemple non limitatif, que le réseau de communication RC est destiné à être installé dans un véhicule automobile V, comme par exemple une voiture. Mais l'invention n'est pas limitée à cette application. Elle concerne en effet tout système, installation ou appareil pouvant comprendre au moins un réseau de communication adapté à la transmission bidirectionnelle de trames de données non vidéo et à la transmission unidirectionnelle de trames de données vidéo. Elle concerne donc notamment les véhicules, qu'ils soient de type terrestre, maritime (ou fluvial), ou aérien, les installations, éventuellement de type industriel, et les bâtiments.

On a schématiquement représenté sur l'unique figure un véhicule V comprenant un exemple non limitatif de réseau (de communication) RC. Dans cet exemple, le réseau RC (de type LVDS) comprend un bus auquel sont connectés un organe (ou nœud) maître OM et trois organes (ou nœuds) esclaves OE1 à OE3 (j = 1 à 3). Mais le nombre d'organes esclaves OEj peut prendre n'importe quelle valeur supérieure ou égale à un (1).

L'organe maître OM et les organes esclaves OEj peuvent être de tout type, dès lors qu'ils sont impliqués dans l'acquisition ou l'utilisation de données vidéo. Par exemple, dans le cas d'une voiture il peut s'agir d'un calculateur multimédia ou d'un écran tactile.

Une fois connectés à un réseau RC, l'organe maître OM et les organes esclaves OEj peuvent transmettre des trames de données non vidéo, éventuellement dans des créneaux temporels (ou slots) qui sont prédéfinis dans une table (de programmation), connue de chacun d'entre eux.

Comme illustré sur l'unique figure, l'organe maître OM, selon l'invention, comprend au moins une interface de ligne (ou « sérialiseur ») IL, un microcontrôleur MC, des moyens d'analyse MA et des moyens de stockage MS.

L'interface de ligne (ou sérialiseur) IL est propre à être connectée au bus du réseau RC. Dans le cas d'un réseau LVDS, le bus comprend deux lignes fonctionnant en mode différentiel. Par conséquent, l'interface de ligne IL comprend deux broches (ou « pins ») connectées respectivement aux deux lignes, ainsi qu'une broche (ou pin) de défaut. Parmi les défauts qui peuvent survenir sur les lignes, on peut notamment citer un court-circuit à la masse de l'une ou l'autre ligne, un court-circuit à la tension +12 V de l'une ou l'autre ligne, et un circuit ouvert sur l'une ou l'autre ligne.

La broche (ou pin) de défaut est couplée au microcontrôleur MC via une ligne de défaut LD qui est propre à transmettre une information primaire ip représentative de la présence ou de l'absence d'un défaut de la couche physique assurant la transmission bidirectionnelle sur le bus du réseau RC.

Cette information primaire est par exemple une tension pouvant prendre une valeur basse (par exemple en présence d'un défaut) et une valeur haute (par exemple en l'absence de défaut). Une convention inverse est également possible.

Comme illustré, le couplage entre l'interface de ligne IL et le microcontrôleur MC se fait de préférence via un émetteur/récepteur asynchrone (ou UART (« Universal Asynchronous Receiver Transmitter »)) ER.

Les moyens d'analyse MA sont couplés au microcontrôleur MC. Ils sont agencés pour considérer (ou déterminer) qu'il existe un défaut confirmé de la couche physique en cas de réception par le microcontrôleur MC d'une information primaire ip signalant (ou représentative de) la présence de façon confirmée d'un défaut de la couche physique.

Les moyens d'analyse MA peuvent, par exemple, être réalisés sous la forme de modules logiciels (ou informatiques ou « software ») stockés dans une mémoire de l'organe maître OM. Mais dans une variante ils pourraient être réalisés sous la forme d'une combinaison de circuits électroniques (ou « hardware ») et de modules logiciels, comme c'est par exemple le cas d'un circuit intégré de type FPGA (« Field Programmable Gate Array ») ou ASIC (circuit spécialisé).

Par exemple, le microcontrôleur MC peut être agencé pour échantillonner l'information primaire ip (qui lui est transmise par la broche de défaut) selon une période d'échantillonnage prédéfinie pe. A titre d'exemple, la période d'échantillonnage pe peut être comprise entre environ 50 ms et environ 300 ms. Par exemple, cette période d'échantillonnage pe peut être choisie égale à 100 ms.

Lorsque le microcontrôleur MC dispose d'une telle option, il produit une information secondaire is à l'expiration de chaque période d'échantillonnage pe. On comprendra que cette information secondaire is peut prendre une première valeur en présence d'un défaut et une seconde valeur en l'absence de défaut.

Dans cette option, les moyens d'analyse MA sont agencés pour considérer (ou déterminer) qu'il existe un défaut confirmé de la couche physique en cas de production d'informations secondaires is signalant la présence d'un défaut de la couche physique de façon confirmée.

On notera qu'avec cette option les moyens d'analyse MA peuvent être également agencés pour considérer qu'il y a une absence confirmée de défaut de la couche physique en cas de production d'informations secondaires is signalant une absence de défaut de la couche physique de façon confirmée.

La confirmation de l'absence ou de la présence d'un défaut peut se faire au moyen d'un compteur de défaut cd dont la valeur est comprise entre une valeur minimale vₘᵢₙ et une valeur maximale vₘₐₓ. Dans ce cas, les moyens d'analyse MA peuvent être agencés pour incrémenter d'une unité la valeur v_{cd} du compteur de défaut cd chaque fois qu'est produite une information secondaire is signalant la présence d'un défaut, et pour considérer qu'il existe un défaut confirmé de la couche physique lorsque la valeur v_{cd} du compteur cd atteint la valeur maximale vₘₐₓ.

Par exemple, la valeur minimale vₘᵢₙ peut être choisie égale à zéro (0). Mais cela n'est pas obligatoire. Elle pourrait être positive ou négative.

La valeur maximale vₘₐₓ peut correspondre à une durée prédéfinie dp pendant laquelle le défaut serait présent en permanence et qui est égale à un multiple entier de la période d'échantillonnage pe.

A titre d'exemple, la durée prédéfinie dp peut être comprise entre environ 1 s et environ 3 s. Par exemple cette durée prédéfinie dp peut être choisie égale à 2 s.

De préférence, les moyens d'analyse MA sont également agencés pour décrémenter d'une unité la valeur v_{cd} du compteur de défaut cd chaque fois qu'est produite une information secondaire is signalant une absence de défaut de la couche physique, et pour considérer qu'il y a une absence confirmée de défaut de la couche physique lorsque la valeur v_{cd} du compteur cd atteint la valeur minimale vₘᵢₙ.

On notera que les moyens d'analyse MA peuvent être également agencés pour rendre la valeur v_{cd} du compteur de défaut cd égale à la valeur minimale vₘᵢₙ chaque fois que l'organe maître OM est mis en fonctionnement (« power on ») et que la dernière valeur v_{cd}, qu'il possédait avant la mise hors fonctionnement (« power off ») de l'organe maître OM, était égale à cette valeur minimale vₘᵢₙ. Cette option permet en effet d'obtenir une croissance continue de la valeur v_{cd} sans interruption pendant la durée prédéfinie dp juste après la mise en fonctionnement de l'organe maître OM lorsqu'un défaut est présent continuement.

On notera également que les moyens d'analyse MA peuvent être également agencés pour rendre la valeur v_{cd} du compteur de défaut cd égale à la valeur maximale vₘₐₓ chaque fois que l'organe maître OM est mis en fonctionnement (« power on ») et que la dernière valeur v_{cd}, qu'il possédait avant la mise hors fonctionnement (« power off ») de l'organe maître OM, était égale à cette valeur maximale vₘₐₓ. Cette dernière option permet en effet d'obtenir une décroissance continue de la valeur v_{cd} sans interruption pendant la durée prédéfinie dp juste après la mise en fonctionnement de l'organe maître OM lorsque le défaut n'est plus là de façon continue.

Les moyens de stockage MS sont propres à stocker une valeur qui est représentative d'un défaut confirmé chaque fois que les moyens d'analyse MA considèrent (ou déterminent) qu'il existe un défaut confirmé de la couche physique. Ce sont les moyens d'analyse MA qui déclenchent ce stockage en transmettant la valeur à stocker aux moyens de stockage MS.

Ces moyens de stockage MS peuvent, par exemple, se présenter sous la forme d'une mémoire, éventuellement de type logiciel.

On notera que les moyens de stockage MS peuvent être également propres à stocker une valeur qui est représentative de l'absence confirmée de défaut de la couche physique chaque fois que les moyens d'analyse MA considèrent qu'il n'existe pas de défaut de la couche physique de façon confirmée. Ce sont les moyens d'analyse MA qui déclenchent ce stockage en transmettant la valeur à stocker aux moyens de stockage MS.

Grâce à l'invention, les valeurs qui sont stockées dans les moyens de stockage MS, et qui sont représentatives de défauts confirmés ou d'absence de défaut confirmée, peuvent être avantageusement analysées par un équipement d'analyse d'un service après-vente, ce qui permet d'identifier l'origine des pannes ou dysfonctionnements survenant sur la liaison de transmission bidirectionnelle et donc de localiser les équipements ou éléments défectueux. De plus, l'invention n'induit pas de surcoût de matériel La présente invention est définie par la revendication indépendante jointe à laquelle il convient de se référer. Des caractéristiques avantageuses sont exposées dans les revendications dépendantes.

## Revendications

1. Organe maître (OM) comprenant une interface de ligne (IL) propre à être connectée à un réseau de communication (RC) adapté à la transmission bidirectionnelle de trames de données non vidéo et à la transmission unidirectionnelle de trames de données vidéo, et un microcontrôleur (MC) couplé à ladite interface de ligne (IL) via une ligne de défaut (LD) propre à lui transmettre une information primaire représentative de la présence ou de l'absence d'un défaut de la couche physique assurant ladite transmission bidirectionnelle, ledit organe maître étant agencé de manière à s'échanger des trames de données non vidéo de façon bidirectionnelle, et des trames de données vidéo de façon unidirectionnelle avec au moins un organe esclave, **caractérisé en ce qu'**il comprend en outre des moyens d'analyse (MA) agencés pour considérer qu'il existe un défaut confirmé de ladite couche physique en cas de réception par ledit microcontrôleur (MC) d'une information primaire signalant la présence de façon confirmée d'un défaut de ladite couche physique, et des moyens de stockage (MS) propres à stocker une valeur représentative d'un défaut confirmé de ladite couche physique chaque fois que lesdits moyens d'analyse (MA) considèrent qu'il existe un défaut de ladite couche physique.

2. Organe maître selon la revendication 1, **caractérisé en ce que** ledit microcontrôleur (MC) est agencé pour échantillonner ladite information primaire transmise selon une période d'échantillonnage prédéfinie et pour produire une information secondaire à l'expiration de chaque période d'échantillonnage, et **en ce que** lesdits moyens d'analyse (MA) sont agencés pour considérer qu'il existe un défaut confirmé de ladite couche physique en cas de production d'informations secondaires signalant la présence d'un défaut de ladite couche physique de façon confirmée.

3. Organe maître selon la revendication 2, **caractérisé en ce que** lesdits moyens d'analyse (MA) sont agencés pour considérer qu'il y a une absence confirmée de défaut de la couche physique en cas de production d'informations secondaires signalant l'absence de défaut de ladite couche physique de façon confirmée.

4. Organe maître selon l'une des revendications 2 et 3, **caractérisé en ce que** lesdits moyens d'analyse (MA) sont agencés pour incrémenter d'une unité une valeur d'un compteur de défaut chaque fois qu'est produite une information secondaire signalant la présence d'un défaut de ladite couche physique, et pour considérer qu'il existe un défaut confirmé de ladite couche physique lorsque ladite valeur du compteur atteint une valeur maximale.

5. Organe maître selon la revendication 4, **caractérisé en ce que** lesdits moyens d'analyse (MA) sont agencés pour rendre ladite valeur du compteur de défaut égale à ladite valeur maximale chaque fois que ledit organe maître (OM) est mis en fonctionnement et que la dernière valeur était égale à ladite valeur maximale.

6. Organe maître selon l'une des revendications 4 et 5, **caractérisé en ce que** lesdits moyens d'analyse (MA) sont agencés pour décrémenter d'une unité ladite valeur du compteur de défaut chaque fois qu'est produite une information secondaire signalant une absence de défaut de ladite couche physique, et pour considérer qu'il y a une absence confirmée de défaut de la couche physique lorsque ladite valeur du compteur atteint une valeur minimale.

7. Organe maître selon la revendication 6, **caractérisé en ce que** lesdits moyens d'analyse (MA) sont agencés pour rendre ladite valeur du compteur de défaut égale à ladite valeur minimale chaque fois que ledit organe maître (OM) est mis en fonctionnement et que la dernière valeur était égale à ladite valeur minimale.

8. Organe maître selon l'une des revendications 2 à 7, **caractérisé en ce que** ladite période d'échantillonnage est comprise entre environ 50 ms et environ 300 ms.

9. Véhicule (V) comprenant un réseau de communication (RC) adapté à la transmission bidirectionnelle de trames de données non vidéo et à la transmission unidirectionnelle de trames de données vidéo, **caractérisé en ce qu'**il comprend au moins un organe maître (OM) selon l'une des revendications précédentes, connecté audit réseau de communication (RC).

10. Véhicule selon la revendication 9, **caractérisé en ce que** ledit réseau de communication (RC) est de type LVDS.

## Patentansprüche

1. Master-Organ (OM) mit einer Leitungsschnittstelle (IL), die an ein Kommunikationsnetz (RC) angeschlossen werden kann, das für die bidirektionale Übertragung von Nicht-Video-Datenrahmen und für die unidirektionale Übertragung von Video-Datenrahmen geeignet ist, und einen Mikrocontroller (MC), der mit der Leitungsschnittstelle (IL) über eine Fehlerleitung (LD) gekoppelt ist, die in der Lage ist, an sie primäre Informationen zu übertragen, die für das Vorhandensein oder Nichtvorhandensein eines Fehlers in der physikalischen Schicht repräsentativ sind, die die bidirektionale Übertragung sicherstellt, wobei das Masterelement so angeordnet ist, dass es Nicht-Video-Datenrahmen bidirektional austauscht, und Videodatenrahmen in einer unidirektionalen Weise mit mindestens einem Slave-Element, **dadurch gekennzeichnet, dass** sie ferner Analysemittel (MA) umfasst, die so beschaffen sind, dass sie im Falle des Empfangs von Primärinformationen, die das Vorhandensein eines Defekts in der physikalischen Schicht in einer bestätigten Weise signalisieren, durch den Mikrocontroller (MC) das Vorhandensein eines Defekts in der physikalischen Schicht berücksichtigen, und Speichermittel (MS), die in der Lage sind, einen Wert zu speichern, der einen bestätigten Defekt in der physikalischen Schicht darstellt, und zwar jedes Mal, wenn die Analysemittel (MA) feststellen, dass ein Defekt in der physikalischen Schicht vorliegt.

2. Hauptorgan nach Anspruch 1, **dadurch gekennzeichnet, dass** der Mikrocontroller (MC) so eingerichtet ist, dass er die gemäß einer vordefinierten Abtastperiode übertragenen Primärinformationen abtastet und bei Ablauf jeder Abtastperiode Sekundärinformationen erzeugt, und dass die Analysemittel (MA) so eingerichtet sind, dass sie im Falle der Erzeugung von Sekundärinformationen, die das Vorhandensein eines Defekts der physikalischen Schicht in bestätigter Weise anzeigen, berücksichtigen, dass ein bestätigter Defekt der physikalischen Schicht vorliegt.

3. Hauptorgan nach Anspruch 2, **dadurch gekennzeichnet, dass** die Analysemittel (MA) so eingerichtet sind, dass sie im Falle der Erzeugung von Sekundärinformationen, die das Nichtvorhandensein eines Defekts der physikalischen Schicht in bestätigter Weise anzeigen, das Vorhandensein eines Defekts der physikalischen Schicht berücksichtigen.

4. Hauptorgan nach einem der Ansprüche 2 und 3, **dadurch gekennzeichnet, dass** die Analysemittel (MA) so angeordnet sind, dass sie jedes Mal, wenn eine Sekundärinformation erzeugt wird, die das Vorhandensein eines Defekts der physikalischen Schicht anzeigt, einen Wert eines Defektzählers um eine Einheit inkrementieren, und dass sie davon ausgehen, dass ein bestätigter Defekt der physikalischen Schicht vorliegt, wenn der Wert des Zählers einen Maximalwert erreicht.

5. Hauptorgan nach Anspruch 4, **dadurch gekennzeichnet, dass** die Analysemittel (MA) so angeordnet sind, dass sie den Wert des Fehlerzählers jedes Mal, wenn das Hauptorgan (OM) in Betrieb genommen wird und der letzte Wert gleich dem Maximalwert war, gleich dem Maximalwert machen.

6. Master-Organ nach einem der Ansprüche 4 und 5, **dadurch gekennzeichnet, dass** die Analysemittel (MA) so angeordnet sind, dass sie den Wert des Fehlerzählers jedes Mal um eine Einheit dekrementieren, wenn eine Sekundärinformation erzeugt wird, die ein Nichtvorhandensein eines Fehlers der physikalischen Schicht anzeigt, und dass sie das Vorhandensein eines bestätigten Nichtvorhandenseins eines Fehlers der physikalischen Schicht berücksichtigen, wenn der Wert des Zählers einen Minimalwert erreicht.

7. Hauptorgan nach Anspruch 6, **dadurch gekennzeichnet, dass** die Analysemittel (MA) so angeordnet sind, dass sie den Wert des Fehlerzählers jedes Mal, wenn das Hauptorgan (OM) in Betrieb genommen wird und der letzte Wert gleich dem Minimalwert war, gleich dem Minimalwert machen.

8. Hauptorgan nach einem der Ansprüche 2 bis 7, **dadurch gekennzeichnet, dass** die Abtastperiode zwischen etwa 50 ms und etwa 300 ms liegt.

9. Fahrzeug (V) mit einem Kommunikationsnetz (RC), das für die bidirektionale Übertragung von Nicht-Videodatenrahmen und für die unidirektionale Übertragung von Videodatenrahmen geeignet ist, **dadurch gekennzeichnet, dass** es mindestens eine Mastereinheit (OM) nach einem der vorhergehenden Ansprüche umfasst, die mit dem Kommunikationsnetz (RC) verbunden ist.

10. Fahrzeug nach Anspruch 9, **dadurch gekennzeichnet, dass** das Kommunikationsnetzwerk (RC) vom LVDS-Typ ist.

## Claims

1. Master Unit (OM) comprising a line interface (IL) suitable for connection to a communication network (RC) adapted for the bidirectional transmission of non-video data frames and the unidirectional transmission of video data frames, and a microcontroller (MC) coupled to said line interface (IL) via a fault line (LD) capable of transmitting to it primary information representative of the presence or absence of a fault in the physical layer ensuring said bidirectional transmission, said master device being arranged so as to exchange non-video data frames bidirectionally, and video data frames in a unidirectional manner with at least one slave organ, **characterised in that** it further comprises analysis means (MA) arranged to consider that there is a confirmed defect in said physical layer in the event of reception by said microcontroller (MC) of primary information signalling the presence in a confirmed manner of a defect in said physical layer, and storage means (MS) capable of storing a value representative of a confirmed defect in said physical layer each time said analysis means (MA) consider that there is a defect in said physical layer.

2. Master organ according to claim 1, **characterised in that** said microcontroller (MC) is arranged to sample said primary information transmitted according to a predefined sampling period and to produce secondary information at the expiry of each sampling period, and **in that** said analysis means (MA) are arranged to consider that there exists a confirmed defect of said physical layer in the event of the production of secondary information indicating the presence of a defect of said physical layer in a confirmed manner.

3. Master organ according to claim 2, **characterised in that** said analysis means (MA) are arranged to consider that there is a confirmed absence of a defect in the physical layer in the event of the production of secondary information indicating the absence of a defect in said physical layer in a confirmed manner.

4. Master organ according to one of claims 2 and 3, **characterised in that** said analysis means (MA) are arranged to increment by one unit a value of a fault counter each time secondary information is produced indicating the presence of a fault of said physical layer, and to consider that there is a confirmed fault of said physical layer when said counter value reaches a maximum value.

5. Master organ according to claim 4, **characterised in that** said analysis means (MA) are arranged to make said fault counter value equal to said maximum value each time said master organ (OM) is put into operation and the last value was equal to said maximum value.

6. Master organ according to one of claims 4 and 5, **characterised in that** said analysis means (MA) are arranged to decrement said value of the fault counter by one unit each time secondary information is produced indicating an absence of fault of said physical layer, and to consider that there is a confirmed absence of fault of the physical layer when said value of the counter reaches a minimum value.

7. Master organ according to claim 6, **characterised in that** said analysis means (MA) are arranged to make said fault counter value equal to said minimum value each time said master organ (OM) is put into operation and the last value was equal to said minimum value.

8. Master organ according to one of claims 2 to 7, **characterized in that** said sampling period is between about 50 ms and about 300 ms.

9. Vehicle (V) comprising a communication network (RC) adapted for the bidirectional transmission of non-video data frames and the unidirectional transmission of video data frames, **characterised in that** it comprises at least one master organ (OM) according to one of the preceding claims, connected to said communication network (RC).

10. A vehicle according to claim 9, **characterised in that** said communication network (RC) is of the LVDS type.
